# EUROPEAN PATENT APPLICATION

(11) **EP 2 284 200 A1**
(43) Date of publication of application: **16.02.2011**
(21) Application number: 09166943.2
(22) Date of filing: 31.07.2009
(51) Int. Cl.: C08F 14/18, C09D 127/12, C08K 5/53

(54) **Aqueous fluoropolymer dispersions containing a polyol comprising at least one long chain residue and method for producing them**

(71) Applicant: 3M Innovative Properties Company, Saint Paul, MN 55133-3427 (US)
(72) Inventor: Hintzer, Klaus, 84556, Kastl (DE); Dadalas, Michael, 84307, Eggenfelden (DE); Zipplies, Tilmann, 84489, Burghausen (DE)
(74) Representative: Kurz, Arnd

(57) **Abstract**

A composition comprising
i) one or more polyols containing at least one long chain residue.
ii) a fluoropolymer comprising repeating units derived from TFE, VDF, HFP or a combination thereof and methods of making it and uses thereof.

## Description

### Background

Fluoropolymers have been long known and have been used in a variety of applications because of several desirable properties such as heat resistance, chemical resistance, weatherability, UV-stability etc. The various fluoropolymers are for example described in "Modern Fluoropolymers", edited by John Scheirs, Wiley Science 1997. Commonly known or commercially employed fluoropolymers include polytetrafluoroethylene (PTFE), copolymers of tetrafluoroethylene (TFE) and hexafluoropropylene (HFP) (such copolymers are also referred to as FEP polymers), copolymers of tetrafluoroethylene and perfluoroalkoxy copolymers (such copolymers are also referred to as PFA), copolymers of ethylene and tetrafluoroethylene (such copolymers are also referred to as ETFE polymers), copolymers of tetrafluoroethylene, hexafluoropropylene and vinylidene fluoride (VDF) (such copolymers also referred to as THV) and polyvinylidene fluoride polymers (PVDF) and others.
Fluoropolymers have been used to coat or impregnate substrates to improve the thermal and chemical resistance of the substrate or to provide a protective layer to the substrate.

Fluoropolymers can be conveniently produced by aqueous emulsion polymerization using fluorinated monomers, radical reaction initiators and an emulsifier. Fluorinated alkanoic acids, in particular perfluorooctanoic acid and its salts, have been the emulsifier of choice in the aqueous emulsion polymerization of fluoromonomers for the last decades. Using pefluorooctanoic acid increases the solid content (polymer content) of the dispersions and leads to the generation of polymers of desired molecular weight and particle size in acceptable reaction rates. However, perfluorinated emulsifiers are expensive materials. Recently environmental concerns have been raised against these types of emulsifiers for being bio-persistent and leading to undesired bio-accumulation. Although methods have been developed to retain and recycle the fluorinated emulsifiers complete removal or retention of fluorinated emulsifiers is difficult and leads to additional costs. Furthermore, trace amounts of fluorinated emulsifiers may still be present in the resulting dispersions. Therefore emulsion polymerization methods not requiring fluorinated emulsifiers at all have become of increased interest.
An aqueous emulsion polymerization without using any surfactants has been disclosed, for example, in US 5,453,477, WO 96/24622 and WO 97/17381. For example, WO 97/17381 discloses an aqueous emulsion polymerization in the absence of a surfactant wherein a radical initiator system of a reducing agent and oxidizing agent is used to initiate the polymerization and whereby the initiator system is added in one or more further charges during the polymerization.

Methods using non-fluorinated emulsifiers have also been described, for example in US2006/0281845 or in EP 1 462 461.

While the above methods may provide an alternative to the use of fluorinated emulsifiers there is an interest in finding methods that allow the production of fluoropolymers having small particle sizes. Fluoropolymer dispersions containing small particle sizes have been found to have good properties for coating or impregnation properties. Furthermore, dispersions containing large fluoropolymer particles tend to be less stable than disperions with small fluoropolymer particles leading to premature coagulation (i.e., irreversible phase separation) or settling out of the polymer from the aqueous phase (i.e., reversible phase separation). Both types of phase separation, even the reversible type, are undesired. Premature coagulation is to be avoided when providing fluoropolymer dispersions as a raw material. However, even if the final product is a solid obtained from fluoropolymer dispersions, premature coagulation or settling out of the fluoropolymers is to be avoided because it reduces the shelf life of the dispersion or leads to disruptions in the polymer processing, work up and application steps. The formation of small particle sizes has been found particularly difficult to achieve, in particular when TFE, or a combination of TFE with HFP and/or VDF are used as fluoromonomers.

In WO2008033271 small particle dispersions of TFE, HFP and VDF copolymers with a major part of the polymer made up by TFE were obtained using a carbosilane as emulsifier. However, carbosilanes are not readily available and their use at present is not economical.

Therefore there remains the need for a process providing small particle fluoropolymer dispersions by emulsion polymerization without requiring the use of fluorinated emulsifiers, in particular without requiring perfluorinated alkanoic carboxylic acids. Preferably, such methods are suitable for polymerizations using TFE, HFP or VDF or a combination thereof as fluoromonomers.

### Summary

The present inventors have recognized a continuing need for alternative surfactants to fluorinated surfactants for the emulsion polymerization of fluorinated monomers. In particular, non-fluorinated surfactants may provide an environmentally advantageous alternative to fluorinated surfactants, in particular perfluorinated surfactants.

In one aspect, the present inventors have found that using one or more polyols containing one or more long chain residues, wherein the long chain residue comprises an alkyl, alkoxy or polyoxy alkyl residue containing at least 6 carbon atoms, in the polymerization of fluorinated monomers may lead to the formation of fluoropolymers having small particle sizes.

In another aspect, the present inventors have found that the use of a small amount of the above polyol in the polymerization of fluorinated monomers may yield fluoropolymers having small particle sizes and may be used to produce fluoropolymer dispersions having a solid content of greater than 10% wt.

In a further aspect the present inventors have found that the above can be obtained even when using TFE, HFP, VDF and combinations thereof as fluoromonomers.

Therefore, in one aspect there is provided a method of preparing an aqueous dispersion containing a fluoropolymer comprising repeating units derived from fluorinated olefins, said method comprising polymerizing the fluorinated olefins in an aqueous emulsion polymerization in the presence of one or more of the polyols described above, wherein the fluorinated olefins comprise one or more of the following fluorinated olefins: tetrafluoroethylene, or vinylidenefluoride, or hexafluoropropylene or a combination thereof.

In another aspect there is provided a composition comprising
i) one or more polyol containg one or more long chain residues wherein the long chain residue comprises an alkyl, alkoxy or polyoxy alkyl residue containing at least 6 carbon atoms,
ii) a fluoropolymer comprising repeating units derived from TFE or VDF or HFP or a combination thereof.

In a further aspect there is provided an article prepared from the composition above.

In yet another aspect there is provided an article containing a fluoropolymer obtained by the process described above.

In yet a further aspect there is provided the use of a composition described above for coating or impregnating a fabric, a fiber or a metal surface or a surface containing an organic polymer.

Specific embodiments are summarized below:
1. A method of preparing an aqueous dispersion containing a fluoropolymer comprising repeating units derived from one or more fluorinated olefins, said method comprising polymerizing the fluorinated olefins in an aqueous emulsion polymerization in the presence of a polyol containing at least one long chain residue, wherein the long chain residue comprises an alkyl, alkoxy or polyoxy alkyl residue containing at least 6 carbon atoms and wherein the fluorinated olefins comprise one or more of the following fluorinated olefins: tetrafluoroethylene (TFE), vinylidenefluoride (VDF), hexafluoropropylene (HFP) or a combination thereof, in particular a combination comprising TFE and VDF, a combination comprising TFE and HFP or a combination comprising TFE, VDF and HFP.
2. The method of 1. wherein the polyol containing at least one long chain residue is non-aromatic.
3. The method of 1. or 2. wherein the polyol containing at least one long chain residue is selected from alkyl glycosides, sugar esters, polysorbates or a combination thereof.
4. The method according to any one of 1. to 3. wherein the polyol containing at least one long chain residue comprises an alkyl polyglycoside represented by the general formula, 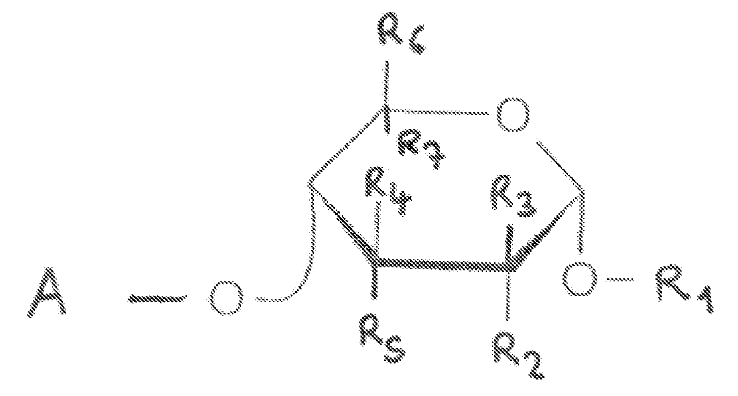
   wherein R₁ represents an alkyl, alkoxy or polyoxy alkyl residue containing at least 6 carbon atoms,
   R₂, R₃, R₄, R₅, R₆ and R₇ are independently either H, OH, OR' or CH₂R" with the proviso that at least one, preferably at least two of R₂, R₃, R₄, R₅, R₆ and R, are OH, wherein R' is an alkyl, alkoxy or polyoxy alkyl residue, R" is OH, an alkyl, alkoxy or polyoxy alkyl or a hydroxyl alkyl or alkoxy or polyoxyalkyl, a polyhydroxy alkyl or alkoxy or polyoxyalky residue; A represents one or more, similar or different cyclic, linear or branched polyhydroxy residues.
5. The method according to 1. to 4. wherein the polyol is an alkyl (poly)glucoside represented by the general formula 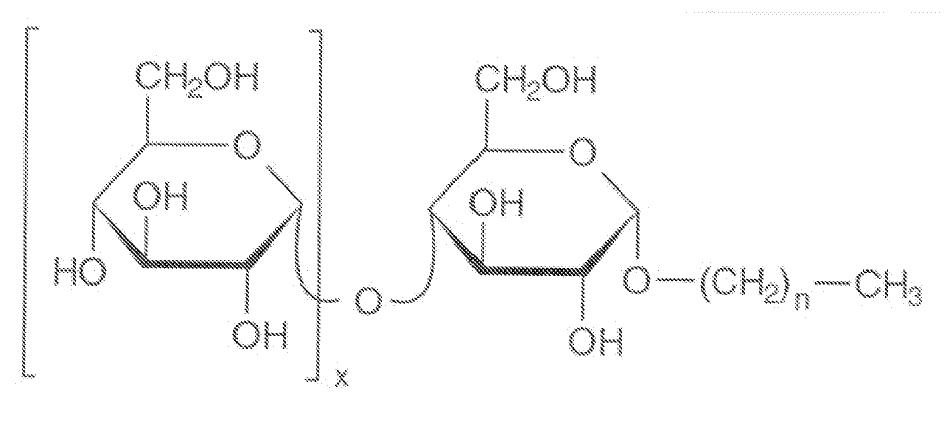 wherein x represents 0, 1, 2, 3, 4 or 5 and n represents an integer of from 8 to 22. In case where x is 0, the ether oxygen contains a hydrogen and forms an hydroxyl group.
6. The method according to 1. to 4. wherein the polyol comprises a sorbitan ester.
7. The method according to 1. to 6. wherein the polymerizing takes place in an aqueous medium that is free of perfluorinated alkanoic acids of the type F₃C-[(CF)₂]ₙ-Z wherein n is an integer of 4 to 16 and Z is a carboxylic acid group or contains the perfluorinated alkanoic acids in an amount of greater 0 and less than 100 ppm.
8. The method according to 1. to 7. wherein the polyol is present in an amount of from 0.0001 to 1.0 weight percent based on the weight of the aqueous phase.
9. The method according to 1. to 8. wherein the fluorinated olefins are selected so as to produce a polymer selected from:
   (i) a polymer comprising repeating units derived from vinylidene fluoride and tetrafluoroethylene;
   (ii) a polymer comprising repeating units derived from vinylidene fluoride and hexafluoropropylene;
   (iii) a polymer comprising repeating units derived from vinylidene fluoride, tetrafluoroethylene, and hexafluoropropylene;
   (iv) a polymer comprising repeating units derived from vinylidene fluoride, tetrafluoroethylene, hexafluoropropylene, and a hydrocarbon alpha-olefin having from 2 to 9 carbon atoms;
   (v) a polymer comprising repeating units derived from tetrafluoroethylene and a hydrocarbon alpha-olefin having from 2 to 9 carbon atoms;
   (vi) a copolymer of hexafluoropropylene and a hydrocarbon alpha-olefin having from 2 to 9 carbon atoms;
   (vii) a polymer comprising repeating units derived from tetrafluoroethylene, hexafluoropropylene, and a hydrocarbon alpha-olefin having from 2 to 9 carbon atoms; and
   (viii) a polymer comprising repeating units derived from tetrafluoroethylene having a melt flow index (ISO- 12086-2) at 372°C of greater than 0.1 g/10min at a load of 10kg.
10. The method according to 1. to 9. wherein the fluoropolymer has an average particle size (number average) of from about 20 to about 350 nm or from about 50 to about 200 nm
11. The method according 1. to 10. wherein the fluoropolymer comprises one or more repeating units derived from tetrafluoroethylene, hexafluoropropylene and vinylidenefluoride.
12. The method according to 1. to 11. wherein the fluoropolymer is curable.
13. A composition comprising
   i) one or more polyol containing at least one long chain residue
   ii) a fluoropolymer comprising repeating units derived from TFE, VDF, HFP or a combination thereof.
14. The composition of 13. wherein the polyol containing at least one long chain residue is as defined in any one of 1. to 6.
15. The composition according to any one of 13. or 14. wherein the composition is free of perfluorinated alkanoic acids of the type F₃C-[(CF)₂]ₙ-Z wherein n is an integer of 4 to 16 and Z is a carboxylic acid group or contains the perfluorinated alkanoic acids in an amount of greater 0 and less than 100 ppm.
16. The composition according to any one of 13. to 15. wherein the fluoropolymer is selected from:
   (i) a polymer comprising repeating units derived from vinylidene fluoride and tetrafluoroethylene;
   (ii) a polymer comprising repeating units derived from vinylidene fluoride and hexafluoropropylene;
   (iii) a polymer comprising repeating units derived from vinylidene fluoride, tetrafluoroethylene, and hexafluoropropylene;
   (iv) a polymer comprising repeating units derived from vinylidene fluoride, tetrafluoroethylene, hexafluoropropylene, and a hydrocarbon alpha-olefin having from 2 to 9 carbon atoms;
   (v) a polymer comprising repeating units derived from tetrafluoroethylene and a hydrocarbon alpha-olefin having from 2 to 9 carbon atoms;
   (vi) a copolymer of hexafluoropropylene and a hydrocarbon alpha-olefin having from 2 to 9 carbon atoms;
   (vii) a polymer comprising repeating units derived from tetrafluoroethylene, hexafluoropropylene, and a hydrocarbon alpha-olefin having from 2 to 9 carbon atoms; and
   (viii) a polymer comprising repeating units derived from tetrafluoroethylene having a melt flow index (ISO- 12086-2) at 372°C of greater than 0.1 g/10min at a load of 10kg.
17. The composition according to any one of 13. to 16. wherein the fluoropolymer has an average particle size of from about 20 to about 350 nm, preferably from about 30 to about 250 nm, more preferably from about 50 up to about 210 nm.
18. The composition according to any one of 13. to 17. wherein the fluoropolymer has an MFI (265/5) of from about 0.01 to about 100 g / 10 min or an MFI (372/5) of from about 0.01 to about 100 g / 10 min.
19. The composition according to any one of 13. to 18. wherein the fluoropolymer melts between 100°C and 310°C.
20. The composition according to any one of 13. to 19. wherein the composition is an aqueous dispersion.
21. The composition according to any one of 13. to 20. wherein the composition is an aqueous composition having a fluoropolymer content (solid content) of from about 20 to about 60% wt. and further containing one or more anionic surfactants and/or one or more non-ionic surfactants.
22. The composition according to any one of 13. to 21. wherein the fluoropolymer is curable.
23. An article prepared from the composition according to 12. to 22.
24. An article containing a fluoropolymer obtained by the process according to 1. to 11.
25. The article according to 23. or 24., wherein the article is selected from organic or inorganic fibers, organic or inorganic non-woven or woven fabrics.
26. The article according to 23. or 24., wherein the article is selected from hoses, seals, O-rings, gaskets, laminates or layered articles containing at least one layer containing an organic polymer.
27. Use of a composition according to 12. to 22. for coating or impregnating a fabric, a fiber or a layer containing one or more organic polymers.

### Detailed Description

Before any embodiments of this disclosure are explained in detail, it is to be understood that the disclosure is not limited in its application to the details of composition and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to encompass the items listed thereafter and equivalents thereof as well as additional items. The use of "a" or "an" is meant to encompass "one or more".

Any numerical range recited herein is intended to include all values from the lower value to the upper value of that range. For example, a concentration range of from 1 % to 50% is intended to be an abbreviation and to expressly disclose the values between the 1% and 50%, such as, for example, 2%, 40%, 10%, 30%, 1.5 %, 3.9 % and so forth.

The aqueous emulsion polymerization processes described herein can be used to produce fluoropolymers that have a partially or fully fluorinated (perfluorinated) backbone and to produce aqueous dispersions containing them. The dispersions may be free of alkanoic acids of the formula CF₃-(CF₂)ₙ-COO- wherein n is an integer of 6 to 10 containing them in an amount of greater 0 but less than 100 ppm or less than 50 ppm.

The fluoropolymers that can be produced by the processes provided herein contain repeating units derived from fluorinated olefins (also referred to as fluorinated olefinic monomers or fluoromonomers). Such fluorinated olefinic monomers include tetrafluoroethylene (TFE) and/or vinylidenefluoride (VDF). However, further fluorinated and also non-fluorinated olefins may be used as monomers to produce TFE copolymers, VDF-copolymers or copolymers containing repeating units derived from TFE and VDF and one or more further fluorinated or non-fluorinated fluoromomers.

Fluoromonomers include, but are not limited to fluoroolefins, such as vinylidene fluoride (VDF), hexafluoropropylene (HFP), tetrafluoroethylene (TFE), 1,2,3,3,3-pentafluoropropene (1-HPFP), 1,1,3,3,3-pentafluoropropene (2-HPFP), chlorotrifluoroethylene (CTFE) and vinyl fluoride (VF).

Fluoromonomers also include but are not limited to fluorine-containing vinyl ethers such as, for example, perfluoro(alkyl vinyl) ethers. Perfluoro(alkyl vinyl) ethers (PAVE) suitable for use as monomers include those of the formula (I):

CF₂=CFO(R'O)ₙ(R"O)ₘRf (I)

where R' and R", are different linear or branched perfluoroalkylene groups of 2-6 carbon atoms, m and n are independently 0-10, wherein the sum of n+m may be 0 or at least 1 and Rf is a perfluoroalkyl group of 1-6 carbon atoms.

Particular embodiments of perfluoro(alkyl vinyl) ethers includes compositions of the formula (II):

CF₂₌CFO(CF₂CFXO)ₙRf (II)

where X is F or CF₃, n is 0-5, and Rf is a perfluoroalkyl group of 1-6 carbon atoms or wherein n is 0 or 1 and Rf contains 1-3 carbon atoms. Examples of such perfluorinted ethers include perfluoro(methyl vinyl) ether (PMVE) and perfluoro(propyl vinyl) ether (PPVE).

Other useful monomers include compounds of the formula (III):

CF₂=CFO[(CF₂)ₘCF₂CFZO]ₙRf (III)

where Rf is a perfluoroalkyl group having 1-6 carbon atoms, m = 0 or 1 , n = 0-5, and Z = F or CF3. Specific members of this class are those in which Rf is CF₃, C₂F₅ or C₃F₇, m = 0,andn=1.

Other examples of useful perfluoro(alkyl vinyl ethers) include compounds corresponding to the formula (IV):

CF₂=CFOCF₂CF(CF₃)O(CF₂O)ₘCₙF₂ₙ₊₁ (IV)

where n is an integer from 1 to 5, preferably 1, and m is an integer from 1 to 3.

Fluoromonomers also include, but are not limited to, fluorine-containing allyl ethers such as, for example, perfluoro(alkyl allyl) ethers. Perfluoro(alkyl allyl) ethers (PAAE) suitable for use as monomers include those of the formula (V):

CF₂=CFCF₂O(R'O)ₙ(R"O)ₘRf (V)

where R' and R", are different linear or branched perfluoroalkylene groups of 2-6 carbon atoms, m and n are independently 0-10, wherein the sum of n+m is 0 or at least 1, and Rf is a perfluoroalkyl group of 1-6 carbon atoms.

Non-fluorinated monomers that can be used as comonomers include alpha-olefins, for example ethylene and propylene. Hydrocarbon olefins useful in the fluoropolymers prepared by the process of this invention include, but are not limited to ethylene and propylene. If copolymerized units of a hydrocarbon olefin are present in the fluoroelastomers prepared by the process of this invention, the hydrocarbon olefin content is generally between about 4 to about 30 weight percent.

Combinations of any of the above-named fluoromonomers and combinations of above named fluoromonomers and hydrocarbon olefins are also contemplated.

Preferred monomers include TFE, VDF and HFP, a combination of TFE and VDF, and a combination of TFE, VDF and HFP. Copolymers also include those in which TFE is present in equal or greater amounts (by mole) compared to the other monomers.

The fluoropolymers may be thermoplastic fluoropolymers or fluoroelastomers. By "thermoplastic fluoropolymer" is meant a crystalline or semi-crystalline fluoropolymer. Crystalline or semi-crystalline fluoropolymers may typically have a sharp melting point (i.e. a melting point wherein the melting has occurred within a range covering less than 3 °C), or they may have a melting range. The melting point or range typically is between about 90° C to about 327°C, preferably between about 100°C and about 310°C (and can be measured, for example, by DSC).

Thermoplastic fluoropolymers may be homopolymers (e.g. polytetrafluoroethylene homopolymers or polyvinylidene fluoride homopolymers, wherein the term "homopolymer" may include polymers with a comonomer content of up to 5% weight. Thermoplastic fluoropolymers include, but are not limited to THV's (= polymers comprising repeating units derived from TFE, HFP and VDF), FEP's (= polymers comprising repeating units derived from TFE and FEP) and PFA's (= polymers comprising repeating units derived from TFE and perfluoroalkylvinyl ether or perfluoroalkylvinyl ether).

By "fluoroelastomer" is meant an amorphous fluoropolymer that can be cured (cross-linked) to obtain elastomeric properties or an amorphous polymer that has elastomeric properties (and which typically is cross-linked). Amorphous fluoropolymers generally do not have a melting point or melting range. Fluoroelastomers may contain between 25 to 70 weight percent or 30 to 60 weight percent, based on the weight of the fluoroelastomer, of copolymerized units of a first fluoromonomer which may be vinylidene fluoride (VDF) or tetrafluoroethylene (TFE) or a PAVE or a combination thereof. The remaining units in the fluoroelastomers are comprised of one or more additional copolymerized monomers, different from said first monomer. Such monomers include the fluoromonomers described above, the hydrocarbon olefins described above and mixtures thereof.

The fluoroelastomers also include fluoropolymers containing units of one or more cure site monomers. Cure site monomers introduce into the fluoropolymer groups that are susceptible to cross-linking agents to form cross-linked polymer network. Therefore, fluoroelastomers include curable (cross-linkable) and cured (cross-linked) fluoropolymers.

Examples of suitable cure site monomers include, but are not limited to: i) bromine - containing olefins; ii) iodine-containing olefins; iii) bromine-containing vinyl ethers; iv) iodine-containing vinyl ethers; v) fluorine-containing olefins having a nitrile group; vi) fluorine-containing vinyl ethers having a nitrile group; vii) 1,1,3,3,3-pentafluoropropene (2-HPFP); viii) perfluoro(2-phenoxypropyl vinyl) ether; and ix) non-conjugated dienes.

Brominated cure site monomers may contain other halogens, preferably fluorine. Examples of brominated olefin cure site monomers are CF₂=CFOCF₂CF₂CF₂0CF₂CF₂Br; bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene-1; 4-bromo-t 1,3,3,4,4-hexafluorobutene; 4-bromo-3-chtoro-1,1,3,4,4-pentafluorobutene; 6-bromo-5,5,6,6-tetrafluorohexene; bromoperfluorobutene-1 and 3,3-difluoroallyl bromide. Suitable brominated vinyl ether cure site monomers include 2-bromo-perfluoroethyl perfluorovinyl ether and fluorinated compounds of the class CF₂Br-Rf-O-CF=CF₂ (Rf is a perfluoroalkylene group), such as CF₂BrCF₂O-CF=CF₂, and fluorovinyl ethers of the class ROCF=CFBr or ROCBr=CF₂ (where R is a lower alkyl (C1-C6) group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-1, wherein R is -H or -CH₃; Z is a C1- C18 (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙO-CF=CF₂ and ICH₂CF₂O[CF(CF₃)CF₂O]ₙCF=CF₂, and the like, wherein n=1-3. In addition, suitable iodinated cure site monomers including iodoethylene, 4-iodo-3,3,4,4-tetrafluorobutene-1 (ITFB); 3-chloro-4-iodo-3,4,4- trifluorobutene; 2-iodo -1,1,2,2-tetrafluoro-1-(vinyloxy)ethane; 2- iodo-1-(perfluorovinyloxy)-1,1,2,2-tetrafluoroethylene; 1,1, 2,3,3,3-hexafluoro-2-iodo-l-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Useful nitrile-containing cure site monomers include those of the formulae: CF₂=CF-O(CF₂)ₙ-CN where n = 2-12, preferably 2-6; CF₂=CF-O[CF₂-CF(CF₃)-O]ₙ-CF₂-CF(CF₃)-CN where n= 0-4, preferably 0-2; CF₂=CF-[OCF₂CF(CF₃)]ₓ-O-(CF₂)ₙ-CN where x = 1-2, and n = 1-4; and
CF₂=CF-O-(CF₂)ₙ-O-CF(CF₃)CN where n = 2-4. Preferred cure site monomers are perfluorinated polyethers having a nitrile group and a trifluorovinyl ether group, such as, for example, CF₂=CFOCF₂CF(CF₃)OCF₂CF₂CN, (i.e., perfluoro(8-cyano-5-methyl-3,6-dioxa-1-octene) or 8-CNVE).

Examples of non-conjugated diene cure site monomers include, but are not limited to 1,4-pentadiene; 1,5-hexadiene; 1,7-octadiene; 3,3,4,4-tetrafluoro-1 ,5-hexadiene. A suitable triene is 8-methyl-4-ethylidene-1,7-octadiene.

Of the cure site monomers listed above, preferred compounds, for situations wherein the fluoroelastomer will be cured with a peroxide curing agent, include cure-site monomers containing one or more iodine and/or one or more bromine groups and cure site monomers containing one or more nitrile groups or a combination thereof. Typical examples include 4-bromo-3,3,4,4-tetrafluorobutene-1 (BTFB); 4-iodo-3,3,4,4-tetrafluorobutene-1 (ITFB); allyl iodide; bromotrifluoroethylene, nitrile-containing cure site monomer such as 8-CNVE.

When the fluoroelastomer will be cured with a polyol curing agent, 2-HPFP or perfluoro(2-phenoxypropyl vinyl) ether may be used as the preferred cure site monomer.

When the fluoroelastomer will be cured with a tetraamine, bis(aminophenol) or bis(thioaminophenol), a nitrile-containing cure site monomer (e.g. 8-CNVE) may be used as a preferred cure site monomer.

When the fluoroelastomer will be cured with ammonia or a compound that releases ammonia at curing temperatures (e.g. urea), a nitrile-containing cure site monomer (e.g. 8-CNVE) is the preferred cure site monomer.

Units of cure site monomer, when present in the fluoroelastomers manufactured by the process of this invention, are typically present at a level of 0.05-10 wt.% (based on the total weight of fluoroelastomer), preferably 0.05-5 wt.% and most preferably between 0.05 and 3 wt.%. The optimum amounts depend on the curing agent, presence or absence of curing accelerators and curing regime used and can be determined by routine experimentation.

Specific fluoroelastomers which may be produced by the process of this invention include, but are not limited to those comprising copolymerized units of i) vinylidene fluoride and hexafluoropropylene; ii) vinylidene fluoride, hexafluoropropylene and tetrafluoroethylene; iii) vinylidene fluoride, hexafluoropropylene, tetrafluoroethylene and 4-bromo- 3,3,4,4-tetrafluorobutene-1; iv) vinylidene fluoride, hexafluoropropylene, tetrafluoroethylene and 4-iodo-3,3,4,4-tetrafluorobutene-1; v) vinylidene fluoride, perfluoro(methyl vinyl) ether, tetrafluoroethylene and 4-bromo- 3,3,4,4-tetrafluorobutene-1; vi) vinylidene fluoride, perfluoro(methyl vinyl) ether, tetrafluoroethylene and 4-iodo-3,3,4,4-tetrafluorobutene-1; vii) vinylidene fluoride, perfluoro(methyl vinyl) ether, tetrafluoroethylene and 1,1,3,3,3-pentafluoropropene; viii) tetrafluoroethylene, perfluoro(methyl vinyl) ether and ethylene; ix) tetrafluoroethylene, perfluoro(methyl vinyl) ether, ethylene and 4-bromo-3,3,4,4-tetrafluorobutene-1; x) tetrafluoroethylene, perfluoro(methyl vinyl) ether, ethylene and 4-iodo- 3,3,4,4-tetrafluorobutene-1; xi) tetrafluoroethylene, propylene and vinylidene fluoride; xii) tetrafluoroethylene and perfluoro(methyl vinyl) ether; xiii) tetrafluoroethylene, perfluoro(methyl vinyl) ether and perfluoro(8-cyano-5-methyl-3,6-dioxa-1 -octene); xiv) tetrafluoroethylene, perfluoro(methyl vinyl) ether and 4-bromo-3,3,4,4-tetrafluorobutene-1; xv) tetrafluoroethylene, perfluoro(methyl vinyl) ether and 4-iodo-3, 3,4,4-tetrafluorobutene-1; and xvi) tetrafluoroethylene, perfluoro(methyl vinyl) ether and perfluoro(2-phenoxypropyl vinyl) ether.

Additionally, iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine or bromine level in the fluoroelastomer in the range of 0.005-5 wt.%, preferably 0.05-3 wt.%.
Examples of chain transfer agents include iodine-containing compounds that result in incorporation of bound iodine at one or both ends of the polymer molecules.

Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2- chloroperfluoropropane; 1,2-di(iododifluoromethyl)-perfluorocyclobutane; monoiodoperfluoroethane; monoiodoperfluorobutane; 2-iodo-l-hydroperfluoroethane, etc. Also included are the cyano-iodine chain transfer agents. Particularly preferred are diiodinated chain transfer agents. Examples of brominated chain transfer agents include 1-bromo-2-iodoperfluoroethane; 1-bromo-3-iodoperfluoropropane; 1-iodo-2-bromo-1,1-difluoroethane and others.

Other chain transfer agents suitable for use in the process of this invention include include isopropanol, diethylmalonate, ethyl acetate, chloroforme acetone and dodecyl mercaptan, dialkyl ether.

Cure site monomers and chain transfer agents may be added to the reactor neat or as solutions. In addition to being introduced into the reactor near the beginning of polymerization, quantities of chain transfer agent may be added throughout the entire polymerization reaction period, depending upon the desired composition of the fluoroelastomer being produced, the chain transfer agent being employed, and the total reaction time.

The methods of the invention can be used to produce fluoropolymers containing repeating units derived from tetrafluoroethlyene and fluoropolymers containing repeating units derived from tetrafluoroethylene and one or more comonomers. The methods of the invention can be used to produce fluoropolymers containing repeating units derived from vinylidenfluoride and fluoropolymers containing repeating units derived from vinylidenfluoride and one or more comonomers. The aqueous emulsion polymerization processes can be used to produce homo- and copolymers of vinylidenefluoride and/or tetrafluoroethylene (such as, for example, bipolymers, terpolymers or quadpolymers of TFE and VDF).

Particularly, the methods of the present invention may be used to produce a polymer selected from:
(i) a polymer comprising repeating units derived from vinylidene fluoride and tetrafluoroethylene;
(ii) a polymer comprising repeating units derived from vinylidene fluoride and hexafluoropropylene;
(iii) a polymer comprising repeating units derived from vinylidene fluoride, tetrafluoroethylene, and hexafluoropropylene;
(iv) a polymer comprising repeating units derived from vinylidene fluoride, tetrafluoroethylene, hexafluoropropylene, and a hydrocarbon alpha-olefin having from 2 to 9 carbon atoms;
(v) a polymer comprising repeating units derived from tetrafluoroethylene and a hydrocarbon alpha-olefin having from 2 to 9 carbon atoms;
(vi) a copolymer of hexafluoropropylene and a hydrocarbon alpha-olefin having from 2 to 9 carbon atoms;
(vii) a polymer comprising repeating units derived from tetrafluoroethylene, hexafluoropropylene, and a hydrocarbon alpha-olefin having from 2 to 9 carbon atoms; and
(viii) a polymer comprising repeating units derived from tetrafluoroethylene having a melt flow index (ISO- 12086-2) at 372°C of greater than 0.1 g/10min at a load of 10 kg or an MFI at 265°C of from about 0.01 to about 100 g/10 min at a load of 5 kg.

In further embodiments the methods provided herein may be used to produce fluoropolymers selected from
(i) a bipolymer of vinylidene fluoride and tetrafluoroethylene;
(ii) a bipolymer of vinylidene fluoride and hexafluoropropylene;
(iii) a terpolymer of vinylidene fluoride, tetrafluoroethylene, and hexafluoropropylene;
(iv) a quadpolymer of vinylidene fluoride, tetrafluoroethylene, hexafluoropropylene, and a hydrocarbon alpha-olefin having from 2 to 9 carbon atoms;
(v) a bipolymer of tetrafluoroethylene and a hydrocarbon alpha-olefin having from 2 to 9 carbon atoms;
(vi) a bipolymer of hexafluoropropylene and a hydrocarbon alpha-olefin having from 2 to 9 carbon atoms;
(vii) a terpolymer of tetrafluoroethylene, hexafluoropropylene, and a hydrocarbon alpha-olefin having from 2 to 9 carbon atoms; and
(viii) a homopolymer of tetrafluoroethylene having a melt flow index (ISO- 12086-2) at 372°C of greater than 0.1 g/10min at a load of 10kg,
wherein the term "bipolymer" used in (i), (ii), (v) and (vi) above, the terms "terpolymer" and "quadpolymer" used in (iii), (iv) and (vii) above and the term "homopolymer" used in (viii) above mean that essentially no other monomers have been used in the preparation of the polymer, i.e. that the polymer contains at least 95% by weight of the polymer interpolymerised units of the corresponding monomers.

The fluoropolymers as described above that can be produced by the methods as described herein typically have an MFI (265/5) of from about 0.01 to about 100 g/10 min or an MFI (372/5) of from about 0.01 to about 100 g/10 min, unless described otherwise, wherein MFI (265/5) means measured at 265°C using a 5 kg load and MFI (372/5) means measured at 372°C using a 5 kg load.

The methods provided herein allow for the production of fluoropolymers having a small particle size by aqueous emulsion polymerization without requiring a fluorinated emulsifier. Therefore, stable aqueous dispersions of those fluoropolymers may be obtained. The fluoropolymers that can be produced by the methods described herein are those as described above and can have an average particle size (number average) of not more than 400 nm or less than 350 nm, or even less than 250 nm or up to about 199 nm. For example, the fluoropolymers may have an average particle size (number average) of from about 20 nm to up to about 198 nm, or from about 51 nm up to about 182 nm. More particularly, the methods provided herein allow the production of fluoropolymers having an average particle size (number average) of from about 55 nm to less than about 300 nm, or even up to less than about 250 nm or even up to less than about 200 nm. Typical fluoropolymers include polymers having an average particle size (number average) of not more than 400 nm, or from about 55 nm to less than about 300 nm or less than 250 nm or less than about 200 nm and having an MFI (265/5) of from about 0.01 to about 100 g/10 min or an MFI (372/5) of from about 0.01 to about 100 g/10 min. Typical fluoropolymers include polymers having an average particle size (number average) of not more than 400nm, or from about 55 nm to less than about 300 nm or less than 250 nm or less than about 200 nm and having an MFI (265/5) of from about 0.01 to about 100 g /10 min or an MFI (372/5) of from about 0.01 to about 100 g/10 min and that melts between about 90° C and about 327°C, preferably between 100°C and 310°C, or fluoropolymers that are amorphous.

The average particle sizes can be measured by the methods known in the art, for example, according to ISO 13321.

The particles obtained by the methods described herein are typically spherical or substantially spherical.

### Polyols:

The fluoropolymers and aqueous dispersions containing them may be prepared by a process comprising polymerizing at least one fluorinated monomer in an aqueous emulsion polymerization in the presence of one or more polyols comprising one or more long chain residues. The long chain residues typically include alkyl, alkoxy or polyoxy alkyl residues containing at least 6 carbon atoms or at least 8 carbon atoms and typically between 6 to 26 or 8 to 16 carbon atoms. The long chain residues may be linear, cyclic or branched. Preferably, the polyols are structured such that one of the hydrogen atoms of one of the hydroxyl groups has been substituted by the long chain residue. The polyols may contain at least 3 OH-groups. Preferably the polyols contain at least two neighbouring OH-groups.
The number of hydroxyl groups and the length and/or amounts of long chain residues can be selected such that the compound is water soluble at room temperature or at least under the reaction conditions. Water soluble means that at least 1 g of the compound get dissolve in 100 ml distilled water at ambient conditions (25°C, 1 bar). Preferably, the polyol has emulsifying properties, which means that it is capable when used in sufficient amounts to provide an emulsion of fluoropolymers in water. Typically, the polyol is an emulsifier. Generally, the amounts of polyols range from about 0.0001 to about 1 % wt. based on the aqueous phase used in the polymerisation.

The polyols are preferably non-ionic and/or non-aromatic.

The polyols may be cyclic or non-cyclic. Non cyclic polyols are typically polyols containing more than 3 OH groups or at least two adjacent OH groups. Examples include erythrit and threit. Typical examples of cyclic polyols include sugars. Suitable polyols containing at least one long chain residue include, for example, alkyl glycosides, sugar esters, polysorbates or a combination thereof.

Cyclic polyols include compounds containing one or more sugar moiety that has been modified such that it bears at least one long chain residue, wherein the long chain residue is a residue comprising one or more, same or different, linear, cyclic or branched alkyl, alkoxy or polyoxy alkyl chains containing at least 6 carbon atoms or at least 8 carbon atoms and typically between 6 to 26 or 8 to 16 carbon atoms.

The sugars include, but are not limited to, monosaccharides at oligosaccharides also. Monsaccarides include pentoses and hexoses.
Typical examples of monosaccharides include ribose, glucose, galactose, mannose, fructose, arabinose, xylose. Oligosaccharides include oligomers of 2 to 10 of the same or different monosaccharides. Examples of oligosaccharides include but are not limited to saccharose, maltose, lactose, raffinose and isomaltose.

Typically, the sugars suitable for use in the present invention include cyclic (furanoses) containing a five-membered ring of 4 carbon atoms and one oxygen atom or cyclic compounds containing a six-membered ring of 5 carbon and one oxygen atom (pyranoses). They further contain at least one, two or more than two hydroxy groups (-OH groups) or one or more hydroxyalkyl groups bound to the carbon ring atoms. Typically, the hydrogen atoms of one or more of the hydroxyl groups (and/or hydroxyalkyl groups) bound to the carbon ring atoms have been substituted by the long chain residue such that an ether or ester bond is created between the long chain residue and the sugar moiety.

The sugar polyols (also refered to sugar emulsifiers) may contain a single or multiple sugar units. A single sugar unit or multiple sugar units may be modified with the long chain residue described above.

Specific examples of cyclic polyols include: a long chain glycosides, sugar esters, sorbitan esters, polysorbates and mixtures and combinations thereof, which will be described in greater detail below.

### Long chain glycosides:

Long chain glycosides are compounds containing at least one sugar moiety linked to one or more long chain residue. If one or more of the sugar moieties comprise glucose, the glycoside is referred to as glucoside.

Long chain glucosides include monoglucosides (i.e. a molecule with a single glucose moiety) diglucosides (i.e. a molecule with two glucose moieties) and poly glucosides (i.e. molecules with two or more glucose moieties). The long chain residues are the same as described above. The glycosides may contain only glucose units but may also contain units of other sugars. The glucose moiety may be present in their pyranose (six-membered ring) or their furanose form (five membered ring) or combinations and mixtures thereof (for example, but not limited to glucopyranosides, glucofuranosides, di-glucopyranosides, di-furanosides, glucopyranoside-glucofuranosides and the like).

If the long chain residues are alkyl residues the long chain glycosides are referred to as alkyl glycosides.
The alkyl glycosides may contain a single, multiple, identical and different alkyl residues. The alkyl residues include linear, cyclic or branched, preferably saturated alkyl residues containing at least 6 carbon atoms. Typically, the alkyl residues contain from 6 to 26, or from 8 to 16 carbon atoms.

Alkyl glycosides include alkyl poly glycosides, which are compounds as described above but which contain more than one sugar moiety.

Suitable alkyl poylglycosides can be represented by the general formula (IV): 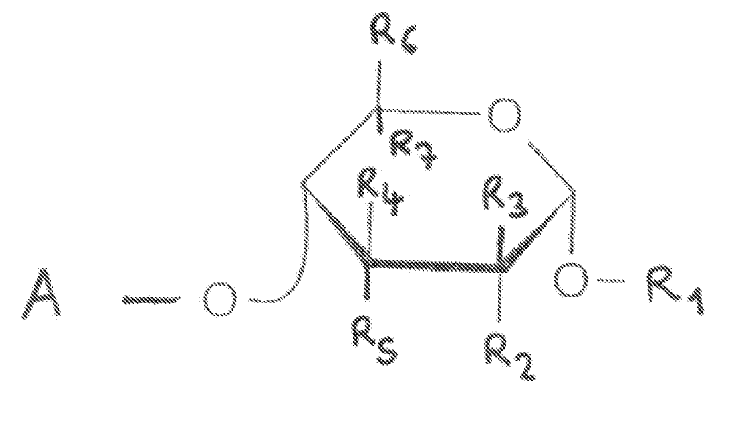
wherein R₁ represents an alkyl, alkoxy or polyoxy alkyl residue containing at least 6 carbon atoms, which may be linear, cyclic or branched,
R₂, R₃, R₄, R₅, R₆ and R₇ are independently either H, OH, OR' or CH₂R" with the proviso that at least one, preferably at least two of R₂, R₃, R₄, R₅, R₆ and R₇ are OH, wherein R' is a residue containing one ore more carbon atoms, typically R' is an alkyl, alkoxy or polyoxy alkyl residue, which may contain up to 6 carbon atoms or which may contain at least 6 carbon atoms, R" is OH, an alkyl, alkoxy or polyoxy alkyl, hydroxy alkyl or alkoxy or polyoxyalkyl hydroxy, a polyhydroxy alkyl or alkoxy or polyoxyalkyl residue, which may contain up to 6 or which may contain at least 6 carbon atoms, A represents one or more, similar or different cyclic, linear or branched polyhydroxy residues, such as, for example sugars which may or may not contain the residues R₁ - R₇ described above.

A preferred type of alkyl glycosides include alkyl glucosides. Alkyl glucosides contain at least one glucose moiety. Examples of alkyl (poly)glucosides include compounds represented by formula (VII): 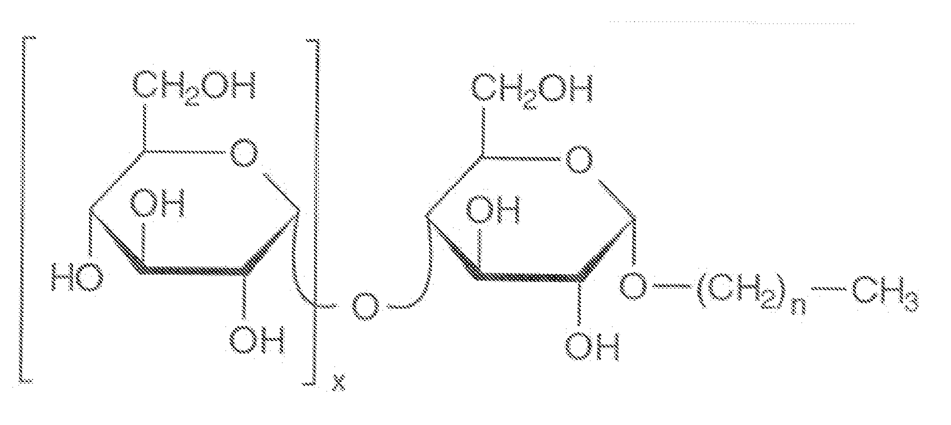 wherein x represents 0, 1, 2, 3, 4 or 5 and n represents an integer of from 8 to 22. In case x is 0, the ether oxygen contains a hydrogen and forms an hydroxyl group.

It is understood that the above formula represents specific examples of alkyl poly glucosides showing glucose in its pyranose form. Other examples also suitable for the use in this invention include, for example but are not limited to, molecules wherein one or more of the hydroxy hydrogens in formula (VII) have been substituted by alkyl, alkyoxy or polyoxy alkyl residues.

Also the repeating glucose residue in the square brackets on the left hand-site of formula (VII) may be replaced by other sugar moieties, which may or may not contain further alkyl-, alkoxy or polyoxyalkyl residues.

Alkyl poly glucosides are available, for example, by acid-catalysed reaction of glucose, starch or n-butyl glucosides with fatty alcohols which typically yields a mixture of various alkyl glucosides (Alkylpolygylcoside, Römpp, Lexikon Chemie, Version 2.0, Stuttgart/New York, Georg Thieme Verlag, 1999). Examples of fatty alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid and combinations thereof.

Alkyl glucosides are also commercially available under the trade designation Glucopon from Cognis GmbH, Düsseldorf, Germany.

### Sugar esters:

Sugar esters include mono- di-, tri or tetraester of sugars and carboxylic acids containing from 6 to 26 or 8 to 16 carbon atoms (such as, for example, fatty acids) and include esters of such carboxylic acids and disaccharides, trisaccharides or tetrasaccharides. Examples of disaccharides include sucrose (a disaccharide of glucose and fructose), lactose, trehalose, maltose, cellobiose, turalose. Examples of trisaccharides include maltotriose, raffinose, melezitose. Fatty acids include, for example, hexanoic acid, octanoic acid, nonanoic acid, decanoic acid, undecanoic acid, dodecanoic acid (lauric acid), tetradecanoic acid (myristinic acid), hexadecanoic acid, heptadecanoic acid, octadecanoic acid, eicosanoic acid and combinations thereof.

A specific type of sugar esters are sorbitan esters. Sorbitan esters include esters, mono-, di- or triesters of sorbitans with long-chain (C6 to C26 or C8 to C16) carboxylic acids, such as for example the fatty acids described above.
Sorbitan esters include compounds according to formula (VIII): 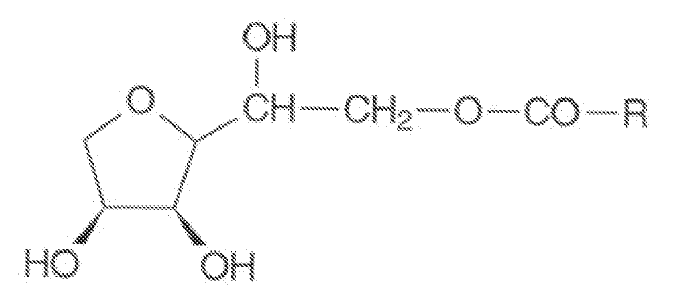 wherein R represents a linear, branched, cyclic, saturated or unsaturated, preferably saturated, alkyl, alkoxy or polyoxy alkyl residue comprising 6 to 26 or 8 to 18 carbon atoms. The sorbitan ester shown in formula (VIII) is a monoester. Di-, tri- or tetraester may also be used.
In such embodiments the hydrogen atoms of one or more or the cyclic and/or the side chain hydroxy group are substituted by the same or different residues R, wherein R is a long chain residue as described above, preferably a linear, cyclic or branched alkyl residue of 6 to 26 or 8 to 18 carbon atoms.

### Polysorbates:

Polysorbates include ethoxylated, propoxylated or alkoxylated sorbitans and may further contain linear cyclic or branched alkyl residues, such as for example, fatty alcohol or fatty acid residues. Examples of polysorbates include those according to general structure (IX): 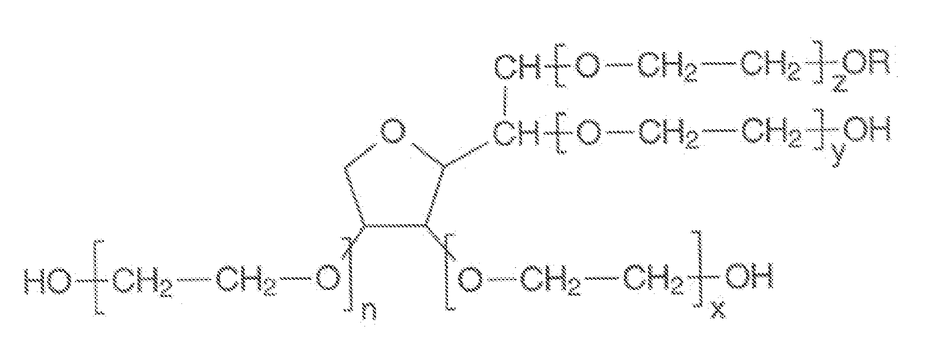 wherein R represents a residue OC-R1 and wherein R1 is a linear, branched, cyclic, saturated or unsaturated, preferably saturated, alkyl, alkoxy or polyoxy alkyl residue comprising 6 to 26, or 8 to 16 carbon atoms.

In the above represented formula (IX) n, x, y, and z are integers including 0 and n +x+y+z is from 3 to 12. Formula (IX) represents monoesters but di-, tri- or tetraester are also encompassed. In such case one or more of the hydroxyl hydrogens is replaced by a residue R, wherein the residue R has the same meaning as described above for the monoester.

Useful polysorbates include those available under the trade designation Polysorbate 20, Polysorbate 40, Polysorbate 60 and Polysorbate 80. Polysorbate 20, is a laurate ester of sorbitol and its anhydrides having approximately twenty moles of ethylene oxide for each mole of sorbitol and sorbitol anhydrides. Polysorbate 40 is a palmitate ester of sorbitol and its anhydrides having approximately twenty moles of ethylene oxide for each mole of sorbitol and sorbitol anhydrides.
Polysorbate 60 is a mixture of stearate and palmitate esters of sorbitol and its anhydrides having approximately twenty moles of ethylene oxide for each mole of sorbitol and sorbitol anhydrides.

### It is understood that mixtures of polyols may also be used.

Preferred polyols include sugar esters and most preferred are long chain glycosides such as for example alkyl poly glycosides or alkyl poly glucosides.

The polyols of the present invention allow for the polymerization of fluorinated monomers without the use of fluorinated surfactants. For instance, in yet further embodiments, the methods described may include polymerizing fluorinated monomers in an aqueous medium that contains less than 100 ppm of perfluorinated alkanoic carboxylates (in particular perfluorinated C-8 to C12 alkanoic acids, such as perfluorooctanoic acid). In other embodiments, the aqueous medium may contain less than 50 ppm, less than 10 ppm, or even 0 ppm of the fluorinated emulsifiers described above.

The polyols of the present invention may be present in very low amounts, especially compared to the amounts of fluorinated surfactant typically used in emulsion polymerization processes. For instance, they may be present in an amount of up to 1 weight percent, up to 0.5 weight percent, or even up to 0.1 weight percent based on the weight of the aqueous phase.

Furthermore, the polyols may be present in an amount of from 0.0001 weight percent, from 0.001 weight percent, from 0.01 weight percent, or even from 0.1 weight percent based on the weight of the aqueous phase. In this context the "weight of the aqueous phase" refers to the weight of the water used in the reaction medium. Optimum amounts may be identified by routine experimentation.

The aqueous emulsion polymerization is typically initiated by an initiator including any of the initiators known for initiating a free radical polymerization of fluorinated monomers. Suitable initiators include peroxides and azo compounds and redox based initiators. Specific examples of peroxide initiators include, hydrogen peroxide, sodium or barium peroxide, diacylperoxides such as diacetylperoxide, disuccinoyl peroxide, dipropionylperoxide, dibutyrylperoxide, diglutaric acid peroxide, and further per-acids and salts thereof such as for example ammonium, sodium or potassium salts. Examples of per- acids include peracetic acid. Esters of the peracid can be used as well. Examples of inorganic initiators include for example ammonium- alkali- or earth alkali salts of persulfates, permanganic or manganic acid or manganic acids and combinations thereof.

A persulfate initiator, for example ammonium persulfate (APS), may be used alone or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include sodium formaldehyde sulfoxylate (RONGALIT, available from BASF, Germany) or fluoroalkyl sulfinates. The reducing agent typically reduces the half-life time of the persulfate initiator. Additionally, a metal salt catalyst such as for example copper, iron or silver salts may be added. The amount of initiator may be from 0.0001 % by weight (based on the fluoropolymer solids to be produced) to 1% by weight. In one embodiment, the amount of initiator is from 0.0005 to 0.5% by weight. In another embodiment, the amount may be from 0.005 to 0.3% by weight.

The aqueous emulsion polymerization system may further comprise other materials, such as buffers and, if desired, complex-formers or chain-transfer agents. When present, chain transfer agents are typically present in small amounts so as to control the chain lengths of the polymers. Examples of chain transfer agents that can be used include ethers, such as dimethyl ether, and methyl t-butyl ether; alkanes having 1 to 5 carbon atoms such as ethane, propane and n-pentane; halogenated hydrocarbons such as CCl₄, CHCl₃ and CH₂Cl₂ and hydrofluorocarbon compounds; and alcohols.

The aqueous emulsion polymerization system may also contain further emulsifiers other than the polyols. Such emulsifiers include for example one or more fluorosurfactants that are not carboxylic acids, such as for example, sulfinates or perfluoroaliphatic sulfinates. The sulfinate may have a formula Rf - SO₂M where Rf is a perfluoroalkyl group or a perfluoroalkoxy group. The sulfinate may also have the formula Rf' - (SO₂M)n where Rf' is a polyvalent, preferably divalent, perfluoro radical and n is an integer from 2-4, preferably 2. Preferably the perfluoro radical is a perfluoroalkylene radical. Generally Rf and Rf' have 1 to 20 carbon atoms, preferably 4 to 10 carbon atoms. M is a cation having a valence of 1 (e.g. H+, Na+, K+, NH₄+, etc.).
Specific examples of such fluorosurfactants include, but are not limited to C₄Fg-SO₂Na; C₆F₁₃-SO₂Na; C₈F₁₇-SO₂Na; C₆F₁₂-(SO₂Na)₂; and C₃F₇-O-CF₂CF₂SO₂Na.

Although not necessary, fluorinated emulsifiers such as fluorinated carboxylic acids, may also used in the present invention, in particular those that have been found to be less bioaccumulating than perfluorinated alkanoic acids. Partially fluorinated or perfluorinated alkoxy acids or polyoxyalkanoic acids may be used if so desired. Such emulsifiers may be fluoropolyethers (FPE) having at least one endgroup selected from the group consisting of carboxylic acid, carboxylic acid salt, sulfonic acid and sulfonic acid salt. The fluoropolyethers can have any chain structure in which oxygen atoms in the backbone of the molecule are separated by saturated fluorocarbon groups having 1-3 carbon atoms. More than one type of fluorocarbon group may be present in the molecule. Representative structures have one or more units selected from (-CF(CF₃)-CF₂-O-), (-CF₂-CF₂-O-), (-CF₂-O-), (-CFH-) or combinations thereof.

Fluoropolymer dispersions with a solids content (polymer content) of from 10 to 39% wt. may be prepared by the methods provided herein. For instance, the solids content may be up to 14%, up to 24%, or up to 31% wt. The dispersions may be upconcentrated to higher solid contents by known methods such as thermal upconcentration, ultrafiltration, phase separation and the like.

In further embodiments, the methods described herein may further comprise adding a non fluorinated anionic surfactant, a non fluorinated, non-ionic surfactant, or a combination thereof to the fluoropolymer dispersions produced by the above-described methods. These surfactants may further increase the stability, for example during or after upconcentration processes or increase the stability of the dispersion to shear forces but may also be added to fine-tune the wetting properties of the compositions, for example to facilitate coating or impregnating a substrate.

Anionic non-fluorinated surfactants that may be used in connection with this invention include surfactants that have an acid group, in particular a sulfonic or carboxylic acid group. Examples of non-fluorinated anionic surfactants include surfactants that have one or more anionic groups. Anionic non-fluorinated surfactants may include in addition to one or more anionic groups, other hydrophilic groups such as polyoxyalkylene groups having 2 to 4 carbons in the oxyalkylene group (for example, polyoxy ethylene groups).
Typical non-fluorinated surfactants include anionic hydrocarbon surfactants. The term "anionic hydrocarbon surfactants" as used herein comprises surfactants that include one or more hydrocarbon moieties in the molecule and one or more anionic groups, in particular acid groups such as sulfonic, sulfuric, phosphoric and carboxylic acid groups and salts thereof. Examples of hydrocarbon moieties of the anionic hydrocarbon surfactants include saturated and unsaturated aliphatic groups having for example 6 to 40 carbon atoms, preferably 8 to 20 carbon atoms. Such aliphatic groups may be linear or branched and may contain cyclic structures. The hydrocarbon moiety may also be aromatic or contain aromatic groups. Additionally, the hydrocarbon moiety may contain one or more hetero-atoms such as for example oxygen, nitrogen and sulfur.

Particular examples of non fluorinated, anionic hydrocarbon surfactants for use in this invention include alkyl sulfonates such as lauryl sulfonate, alkyl sulfates such as lauryl sulfate, alkylarylsulfonates and alkylarylsulfates, and alkylsulfosuccinates, fatty (carboxylic) acids and salts thereof such as lauric acids and salts thereof and phosphoric acid alkyl or alkylaryl esters and salts thereof. Commercially available anionic hydrocarbon surfactants that can be used include those available under the trade designation Polystep Al 6 (sodium dodecylbenzyl sulphonate) from Stepan Company, Germany; Hostapur SAS 30 (secondary alkyl sulphonate sodium salt), Emulsogen LS (sodium lauryl sulfate) and Emulsogen EPA 1954 (mixture of C2 to C4 sodium alkyl sulfates) each available from Clariant GmbH, Germany; Edenor C-12 (Lauric acid) available from Cognis, Germany; and TRITON X-200 (sodium alkylsulfonate) available from Dow Chemical, Midland, MI. Further suitable anionic surfactants include the sulfosuccinates disclosed in EP 1538177 and EP 1526142. Preferred are non-fluorinated, anionic hydrocarbon surfactants having a carboxylic acid group.

Suitable non-fluorinated non-ionic surfactants include those described in "Nonionic Surfactants", M. J. Schick (ed.), Marcel Dekker, Inc., New York 1967. Examples of non-ionic surfactants can be selected from the group of alkylarylpolyethoxy alcohols, polyoxyalkylene alkyl ether surfactants, and alkoxylated acetylenic diols, preferably ethoxylated acetylenic diols, and mixtures of such surfactants.

Typically, the non-ionic surfactant or non-ionic surfactant mixture used will have an HLB (hydrophilic lypophilic balance) between 11 and 16.
The HLB number was introduced by W.C. Griffin "Calculation of HLB Values of Non-lonic Surfactants," Journal of the Society of Cosmetic Chemists 5 (1954), p. 259 to characterize surfactants. The HLB number of non-ionic surfactants having only ethyleneoxide groups can be calculated according to the formula HLB=E/5 where E represents the weight % of ethyleneoxide groups. In particular embodiments, the non-ionic surfactant or mixture of non-ionic surfactants corresponds to the general formula (IX):

R₁O-[CH₂CH₂O]ₙ-[R₂O]ₘ-R₃ (X)

wherein R₁ represents a linear or branched aliphatic or aromatic hydrocarbon group having at least 8 carbon atoms, preferably 8 to 18 carbon atoms. Therefore, in a preferred embodiment, the residue R1 corresponds to a residue (R')(R")C- wherein R' and R" are the same or different, linear, branched or cyclic alkyl groups. In formula (X) above R₂ represents an alkylene having 3 carbon atoms, R₂ represents hydrogen or a C1-C3 alkyl group, n has a value of 0 to 40, m has a value of 0 to 40 and the sum of n+m is at least 2. When the above general formula represents a mixture, n and m will represent the average amount of the respective groups. Also, when the above formula represents a mixture, the indicated amount of carbon atoms in the aliphatic group R₁ may be an average number representing the average length of the hydrocarbon group in the surfactant mixture. Commercially available non-ionic surfactant or mixtures of non-ionic surfactants include those available from Clariant GmbH under the trade designation GENAPOL such as GENAPOL X-080 and GENAPOL PF 40.

Further suitable non-ionic surfactants that are commercially available include those of the trade designation Tergitol TMN 6,Tergitol TMN 100X, Tergitol TMN 10, and Triton X-100 (available from Dow Chemical). According to a further embodiment, a mixture of one or more surfactants according to formula (VII) in which m is 0 with one or more surfactants according to formula (VII) with n and m each being non-zero can be used. An example of such a mixture is a mixture of GENAPOL X-080 and GENAPOL PF40.

### Ethoxylated amines and amine oxides may also be used as emulsifiers.

Further non fluorinated, non-ionic surfactants that can be used include alkoxylated acetylenic diols, for example ethoxylated acetylenic diols. The ethoxylated acetylenic diols for use in this embodiment preferably have a HLB between 11 and 16.
Commercially available ethoxylated acetylenic diols that may be used include those available under the trade designation SURFYNOL from Air Products, Allentown, PA (for example, SURFYNOL 465). Still further useful non-ionic surfactants include polysiloxane based surfactants such as those available under the trade designation Silwet L77 (Crompton Corp., Middlebury, CT) Amine oxides are also considered useful as stabilizing additives to the fluoropolymer dispersions described herein.

Polyelectrolytes, such as polyanionic compounds (for example polyanionic poly acrylates and the like) may also be added to the dispersion in addition or instead of the surfactants described above.

The resultant dispersions are highly stable and generally have small particle sizes. For example the methods provided herewith allow the production of fluoropolymer dispersions containing the fluoropolymers as decribed above having a number average particle size of not more than 400 nm and typically greater than 20 nm, or 50 nm (number average). More particularly, the methods provided herein allow for the production of fluoropolymer dispersions containing the fluoropolymers as described above having an average particle size (number average) of from about 55 nm to less than about 300 nm, or even up to less than about 250 nm or even up to less than about 200 nm.

The dispersions may be monomodal, bimodal or polymodal with respect to particle size distribution and the polymers may have a core-shell structure for example by using a seed-polymerization as known in the art.

The molecular weight distribution of the fluoropolymers can be adapted by methods known in the art such that monomodal, bimodal or multimodal dispersions with respect to the molecular weight distribution of the fluoropolymers may be obtained. Known methods of polymerization also allow for the production of polymers with narrow or broad molecular weight distributions.

Therefore, there are provided aqueous dispersions comprising
i) one or more polyols containing at least one long chain residue as described above,
ii) a fluoropolymer comprising repeating units derived from TFE, TFE and VDF or from TFE, VDF and HFP.
Preferably, the fluoropolymer of (ii) has an average particle size of from about 50 nm up to about 201 nm or up to about 300 nm (number average).
The fluoropolymer of (ii) may further have an MFI (265/5) of from about 0.01 to about 100 g / 10min (or an MFI (372/5) of from about 0.01 to about 100 g/ min) and the dispersion may have a solid content of from about 10 to about 60% by weight based on the weight of the dispersion.
The dispersions are free or are essentially free of perfluorinated alkanoic acids of the type F₃C-[(CF)₂]ₙ-Z wherein n is an integer of 4 to 16 and Z is a carboxylic acid group. Essentially free means > 0 but less than 50 ppm per dispersion.
In particular the fluoropolymers of (ii) above include:
(a) a polymer comprising repeating units derived from vinylidene fluoride and tetrafluoroethylene;
(b) a polymer comprising repeating units derived from vinylidene fluoride and hexafluoropropylene;
(c) a polymer comprising repeating units derived from vinylidene fluoride, tetrafluoroethylene, and hexafluoropropylene;
(d) a polymer comprising repeating units derived from vinylidene fluoride, tetrafluoroethylene, hexafluoropropylene, and a hydrocarbon alpha-olefin having from 2 to 9 carbon atoms;
(e) a polymer comprising repeating units derived from tetrafluoroethylene and a hydrocarbon alpha-olefin having from 2 to 9 carbon atoms;
(f) a copolymer of hexafluoropropylene and a hydrocarbon alpha-olefin having from 2 to 9 carbon atoms;
(g) a polymer comprising repeating units derived from tetrafluoroethylene, hexafluoropropylene, and a hydrocarbon alpha-olefin having from 2 to 9 carbon atoms; and
(h) a polymer comprising repeating units derived from tetrafluoroethylene having a melt flow index (ISO- 12086-2) at 372°C of greater than 0.1 g/10min at a load of 10 kg or an MFI at 265°C (MFI 265/5) of from about 0.01 to about 100g/10 min;
i) VDF homopolymer (which may contain up to 10% wt of other comonomers, in particular HFP and/or CTFE).

The fluoropolymers of (ii) above also include fluoropolymers selected from
(a) a bipolymer of vinylidene fluoride and tetrafluoroethylene;
(b) a bipolymer of vinylidene fluoride and hexafluoropropylene;
(c) a terpolymer of vinylidene fluoride, tetrafluoroethylene, and hexafluoropropylene;
(d) a quadpolymer of vinylidene fluoride, tetrafluoroethylene, hexafluoropropylene, and a hydrocarbon alpha-olefm having from 2 to 9 carbon atoms;
(e) a bipolymer of tetrafluoroethylene and a hydrocarbon alpha-olefin having from 2 to 9 carbon atoms;
(f) a bipolymer of hexafluoropropylene and a hydrocarbon alpha-olefin having from 2 to 9 carbon atoms;
(g) a terpolymer of tetrafluoroethylene, hexafluoropropylene, and a hydrocarbon alpha-olefin having from 2 to 9 carbon atoms; and
(h) a homopolymer of tetrafluoroethylene having a melt flow index (ISO- 12086-2) at 372°C of greater than 0.1 g/10min at a load of 10kg,
wherein the term "bipolymer" used in (a), (b), (c) and (d) above, the terms "terpolymer" and quadpolymer used in (c), (d) and (g) above and the term "homopolymer" used in (h) above mean that essentially no other monomers have been used in the preparation of the polymer, i.e. that the polymer contains at least 99% by weight of the polymer interpolymerised units of the corresponding monomers.

The aqueous dispersions may have a solid content (polymer content) of from about 9 to about 60% wt. and may further contain one or more anionic surfactants and / or one or more non-ionic surfactants like those described above.

Preferred anionic surfactants include alkyl sulfonates such as lauryl sulfonate, alkyl sulfates such as lauryl sulfate, alkylarylsulfonates and alkylarylsulfates, fatty (carboxylic) acids and salts thereof such as lauric acids and salts thereof and phosphoric acid alkyl or alkylaryl esters and salts thereof.
Preferred non-ionic surfactants include those according to formula (X).

The fluoropolymers may be recovered from the dispersions, for example by controlled coagulation, which may be achieved, for example, by applying high shear forces and/or adding coagulation agents, which may include salts, acids, bases and organic solvents that are immiscible with water as known in the art.

The fluoropolymers and the fluoropolymer dispersions obtained by the processes described herein may be used, for example, to laminate, coat and/or impregnate a substrate or a surface. The surface may be an inorganic or organic material. The substrate may be, for example, a fiber, a fabric, a granule or a layer. Suitable substrates include, but are not limited to, fibers, fabrics, granules and layers.
Typically, the substrates include fibers, fabrics, granules and layers containing one or more organic polymers, including, for example, fluoropolymers. The fabrics may be woven or non-woven fabrics. The fibers may be organic or inorganic.

The fluoropolymers and the fluoropolymer dispersions that may be obtained by the processes described above may be used in the preparation of coating compositions, for example coating compositions for coating organic or inorganic substrates, including the substrates described above. Such coating compositions may be aqueous dispersions containing further ingredients such as for example adhesion enhancers or primers. Such coating compositions also include solutions of the fluoropolymers in a suitable organic solvent or a solvent mixture. In particular THV polymers may be soluble in organic solvents and may be used as solutions in a suitable organic solvent (for example methylethyl ketone or methyl isobutyl ketone and the like).

Therefore, the fluoropolymers and fluoropolymer dispersions provided herein may be used to prepare fluoropolymer films or sheets, molded or extruded articles, fluoropolymer containing textiles, garments, outdoor clothing, fluoropolymer layer(s) containing textiles for use in architecture, tents, and the like.

Examples of such articles and methods of preparing them are described in DE 20 2004 020 048 U1, WO03/037623 and US2008/0178993.

The processes described herein may also be used to produce fluoroelastomers, wherein the aqueous dispersions described above may be an intermediary product. Therefore, the fluoropolymers and/or dispersions provided herein may be used to prepare fluoroelastomer compositions and articles comprising one or more layer containing a curable fluoropolymer and articles containing cured fluoroelastomers or at least one layer containing a cured elastomer. Such articles may be injection molded, blow molded, extruded, coextruded, laminated or layered articles. Typical articles include seals, O-rings, gaskets, hoses, containers, tubes and the like. In particular useful are articles, such as containers, hoses and tubes that are used to contain or convey or are exposed to fuels or fuel fumes, such as for example fuel tank, fuel management systems, turbo charger hoses or materials exposed to fuels or fuel fumes in aircraft, water craft, motor vehicles and the like. Other applications are materials used in medical applications, materials used in surface protection, for example in clothing, textiles and textiles or foils used in architectural applications.
Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Methods

Melt flow index (MFI) was determined at 265°C (5kg load) (MFI (265/5) and at 372°C (5kg load) was determined according to DIN EN ISO 1133.

### Particle sizes were determined according to ISO 13321.

Melting points were determined by differential scanning calorimetry (DSC) according to ASTM D 4591.

### Examples:

### Comparative Example 1 (polymerization with a carbosilane surfactant)

30 liters deionized water containing 2 g of a carbosilane surfactant (polyethylene glycole-monomethyl-mono-(bistrimethylsilylmethyl-methyl-prop-3-yl)ether (prepared according to WO 2008/033271) were fed in a 50 liter polymerization kettle together with 200 g NaOH and 40 mg CᵤSO₄ x 5 H₂O. Air was removed by alternating evacuation and pressurizing with nitrogen up to 4 bar. Then the kettle was pressurized with 6.1 bar HFP. 5.2 bar VDF, 2.9 bar TFE and 1.3 bar ethane. The total pressure was 15.5 bar abs. The temperature in the vessel was adjusted to 70°C. The polymerization was initiated by pumping in the vessel an aqueous solution containing 36 g APS (ammonium peroxodisulfate) dissolved in 100 ml deionized water and a solution of 6 g Na₂S₂O₅ in 50 ml deionized water. The speed of agitation was 240 rpm.

The polymerization temperature and pressure were kept constant by feeding TFE, HFP and VDF in a constant weight ratio of 1 : 0.443 : 0.855). When 5.5 kg TFE were consumed, polymerization was stopped by closing the monomer- feeding and lowering the speed of agitation. The vessel was vented and the resulting dispersion discharged. The thus obtained dispersion had a solid content of 29.4 % and an average particle size of about 246 nm.

### Comparative Example 2 (polymerization without a surfactant):

28 liters deionized water containing 12 g ammoniumoxalate and 2 g oxalic acid were fed in a 50 liter polymerization vessel. Air was removed by alternating evacuation and pressurizing with nitrogen up to 4 bar. Then the vessel was pressurized with 8.6 bar HFP, 1.9 bar VDF, 4.2 bar TFE and 0.8 bar ethane. The temperature in the vessel was adjusted to 60°C. Polymerization was initiated by continuously pumping in the vessel an aqueous solution containing 5 g KMnO₄ dissolved in 1000 ml deionized water. The polymerization was started by quickly pumping 111 ml in the vessel, then the pumping rate was lowered to 2.5 ml/min. The speed of agitation was 240 rpm. Polymerization temperature and pressure were kept constant by feeding TFE, HFP and VDF in a constant weight ratio of 1 : 0.412 : 0.488. When 2.5 kg TFE were consumed, polymerization was stopped by closing the monomer- feeding and lowering the speed of agitation.

The vessel was vented and the resulting dispersion discharged. The thus obtained dispersion had a solid content of 13% and a particle size of about 387 nm.

### Example 1

30 liters deionized water containing 2 g of a sugar-based surfactant (GLUCOPON 600 CS UP an alkyl polyglucoside based on natural fatty alcohols (C10 to C16) from Cognis AG, Dusseldorf, Germany) were fed in a 50 liter polymerization kettle together with 200 g NaOH (10% wt. aq. solution) and 37 mg CᵤSO₄ x 5 H₂O and 7.5 g NH₄OH (25% wt. aq. solution). Air was removed by alternating evacuation and pressurizing with nitrogen up to 3 bar. Then the kettle was pressurized with 8.6 bar HFP. 1.9 bar VDF, 4.5 bar TFE and 0.5 bar ethane. The total pressure was 15.5 bar abs. The temperature in the vessel was adjusted to 70°C. The polymerization was initiated by pumping in the vessel an aqueous solution containing 72 g APS (ammonium peroxodisulfate) dissolved in 200 ml deionized water and a solution of 30 g Na₂S₂O₅ in 100 ml deionized water.
The speed of agitation was 240 rpm. The polymerization temperature and pressure were kept constant by feeding TFE, HFP and VDF in a constant weight ratio of 1 : 0.412 : 0.488. When 5.5 kg TFE were consumed, polymerization was stopped by closing the monomer- feeding and lowering the speed of agitation. The vessel was vented and the resulting dispersion discharged. The thus obtained dispersion had a solid content of 26.0 % and an average particle size of about 203 nm. The MFI (372/5) of the polymer was 73g/10 min. The polymer had a melting point (measured by DSC) of 139°C.

## Claims

1. A method of preparing an aqueous dispersion containing a fluoropolymer comprising repeating units derived from one or more fluorinated olefins, said method comprising polymerizing the fluorinated olefins in an aqueous emulsion polymerization in the presence of a polyol containing at least one long chain residue, wherein the long chain residue comprises an alkyl, alkoxy or polyoxy alkyl residue containing at least 6 carbon atoms and wherein the fluorinated olefins comprise one or more of the following fluorinated olefins: tetrafluoroethylene, vinylidenefluoride, hexafluoropropylene or a combination thereof.

2. The method of claim 1 wherein the polyol containing at least one long chain residue is non- aromatic.

3. The method of any one of claims 1 or 2 wherein the polyol containing at least one long chain residue is selected from alkyl glycosides, sugar esters, polysorbates or a combination thereof.

4. The method according to any one of the preceding claims wherein the wherein the polyol containing at least one long chain residue comprises an alkyl polyglycoside represented by the general formula 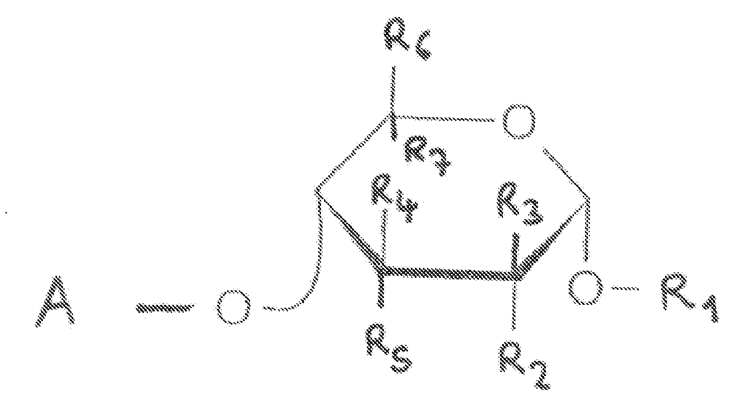
wherein R₁ represents an alkyl, alkoxy or polyoxy alkyl residue containing at least 6 carbon atoms,
R₂, R₃, R₄, R₅, R₆ and R₇ are independently either H, OH, OR' or CH₂R" with the proviso that at least one, preferably at least two of R₂, R₃, R₄, R₅, R₆ and R₇ are OH, wherein R' is a residue containing at least 1 carbon atom, R" is OH, a residue containing at least 1 carbon atom or a residue containing at least one carbon atom and one OH group.
A represents one or more, similar or different cyclic, linear or branched polyhydroxy residues.

5. The method according to 1. to 4. wherein the polyol is an alkyl (poly)glucoside represented by the general formula 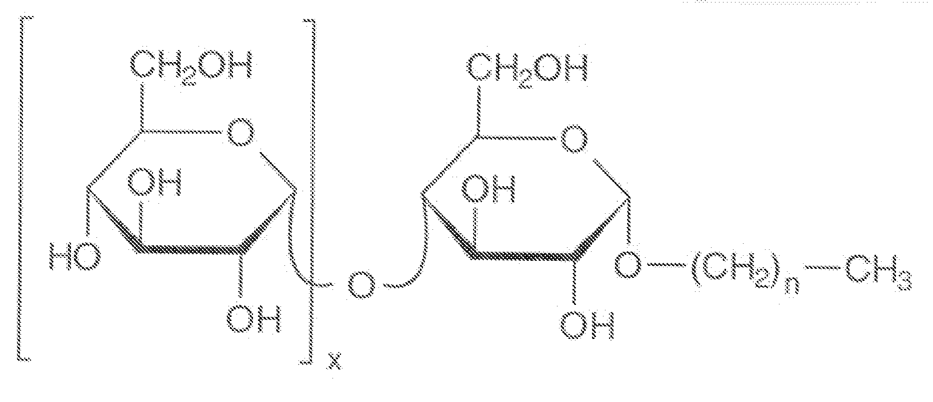 wherein x represents 0, 1, 2, 3, 4 or 5 and n represents an integer of from 8 to 22. In case where x is 0, the ether oxygen contains a hydrogen and forms an hydroxyl group.

6. A composition comprising
i) polyol containing at least one long chain residue
ii) a fluoropolymer comprising repeating units derived from TFE, VDF, HFP or a combination thereof.

7. The composition of claim 6 wherein the polyol containing at least one long chain residue is as defined in any one of claims 2 to 5.

8. The composition according to any one of claims 6 and 7 wherein the composition is free of perfluorinated alkanoic acids of the type F₃C-[(CF)₂]ₙ-Z wherein n is an integer of 4 to 6 and Z is a carboxylic acid group or contains the perfluorinated alkanoic acids in an amount of greater 0 and less than 100 ppm.

9. The composition according to any one of claims 6 to 8 wherein the fluoropolymer is selected from:
(i) a polymer comprising repeating units derived from vinylidene fluoride and tetrafluoroethylene;
(ii) a polymer comprising repeating units derived from vinylidene fluoride and hexafluoropropylene;
(iii) a polymer comprising repeating units derived from vinylidene fluoride, tetrafluoroethylene, and hexafluoropropylene;
(iv) a polymer comprising repeating units derived from vinylidene fluoride, tetrafluoroethylene, hexafluoropropylene, and a hydrocarbon alpha-olefin having from 2 to 9 carbon atoms;
(v) a polymer comprising repeating units derived from tetrafluoroethylene and a hydrocarbon alpha-olefin having from 2 to 9 carbon atoms;
(vi) a copolymer of hexafluoropropylene and a hydrocarbon alpha-olefin having from 2 to 9 carbon atoms;
(vii) a polymer comprising repeating units derived from tetrafluoroethylene, hexafluoropropylene, and a hydrocarbon alpha-olefin having from 2 to 9 carbon atoms; and
(viii) a polymer comprising repeating units derived from tetrafluoroethylene having a melt flow index (ISO-12086-2) at 372°C of greater than 0.1 g/10min at a load of 10kg.

10. The composition according to any one of claims 6 to 9 wherein the fluoropolymer has an average particle size of from about 20 to about 350 nm, preferably from about 30 to about 250 nm, more preferably from about 50 up to about 210 nm.

11. The composition according to any one of claims 6 to 10 wherein the composition is an aqueous dispersion.

12. The composition according to any one of claims 6 to 11 wherein the composition is an aqueous composition having a fluoropolymer content (solid content) of from about 35 to about 60% wt. and further containing one or more anionic surfactants and/or one or more non-ionic surfactants.

13. An article prepared from the composition according to any one of claims 6 to 12.

14. An article containing a fluoropolymer obtained by the process according to any one of claims 1 to 5.

15. Use of a dispersion according to any one of claims 6 to 12 for coating or impregnating a woven or non-woven fabric, an organic or inorganic fiber or a layer containing one or more organic polymers.
